# EUROPEAN PATENT SPECIFICATION

(11) **EP 0 379 899 B1**
(45) Date of publication and mention of the grant of the patent: **08.04.1998**
(21) Application number: 90100523.1
(22) Date of filing: 11.01.1990
(51) Int. Cl.: B32B 15/08, B32B 27/20

(54) **Resin-sandwiched laminate, process and apparatus for producing the same and process for producing resin film for the resin-sandwiched laminate**
Harz-Laminat, Verfahren und Vorrichtung zum Herstellen dessen und Verfahren zum Herstellen einer Harzschicht für das Harz-Laminat.
Stratifié de sandwich résine, procédé et dispositif pour sa fabrication, et procédé de fabrication du film de résine

(30) Priority: 23.01.1989 JP 11980/89; 12.10.1989 JP 263884/89; 12.10.1989 JP 263885/89; 17.11.1989 JP 297642/89
(43) Date of publication of application: 01.08.1990
(73) Proprietor: NIPPON STEEL CORPORATION, Tokyo 100 (JP)
(72) Inventor: Imai, Ryuusuke c/o Nagoya Works of, Toukai City Aichi Prefecture (JP); Nashiwa, Michio c/o Nagoya Works of, Toukai City Aichi Prefecture (JP); Oomura, Yasuhiro c/o Nagoya Works of, Toukai City Aichi Prefecture (JP); Matsuda, Ryouichi c/o Nagoya Works of, Toukai City Aichi Prefecture (JP); Satou, Michio c/o Nagoya Works of, Toukai City Aichi Prefecture (JP); Takeuchi, Tamayuki c/o Nagoya Works of, Toukai City Aichi Prefecture (JP)
(74) Representative: VOSSIUS & PARTNER

(56) References cited:
- EP-A- 0 134 958
- GB-A- 1 360 255
- US-A- 4 353 951

## Description

This invention relates to a resin-sandwiched metal laminate for use in, for example, automobiles, domestic electric appliances and building materials, etc., a process and apparatus for producing the same and a process for producing a resin film for the resin-sandwiched metal laminate.

Generally, a resin-sandwiched metal laminate is produced by applying a resin to one side of one metal sheet or band, placing another metal sheet or band on the resin-applied side and press-bonding the sheets or bands, or by placing a resin film between two metal sheets or bands, and likewise press-bonding the sheets or bands, [Japanese Patent Application Kokai (Laid-open) No. 62-53833, etc.].

It is also known to add an electroconductive filler such as fibers, powders and other irregularly shaped particles of metals, for example, iron, nickel, carbon steel, stainless steel, aluminum, titanium, etc., and non-metals, for example, carbon, etc. to the resin layer in the resin-sandwiched metal laminate, thereby endowing the resin-sandwiched metal laminate with an electroconductivity to obtain a weldability [Japanese Patent Application Kokai (Laid-open) No. 59-145142, etc.]. The electroconductive filler is provided throughout the resin layer between the two metal sheets and thus the resin-sandwiched metal laminate has a good weldability in any region on the face and back sides of the resin-sandwiched metal laminate.

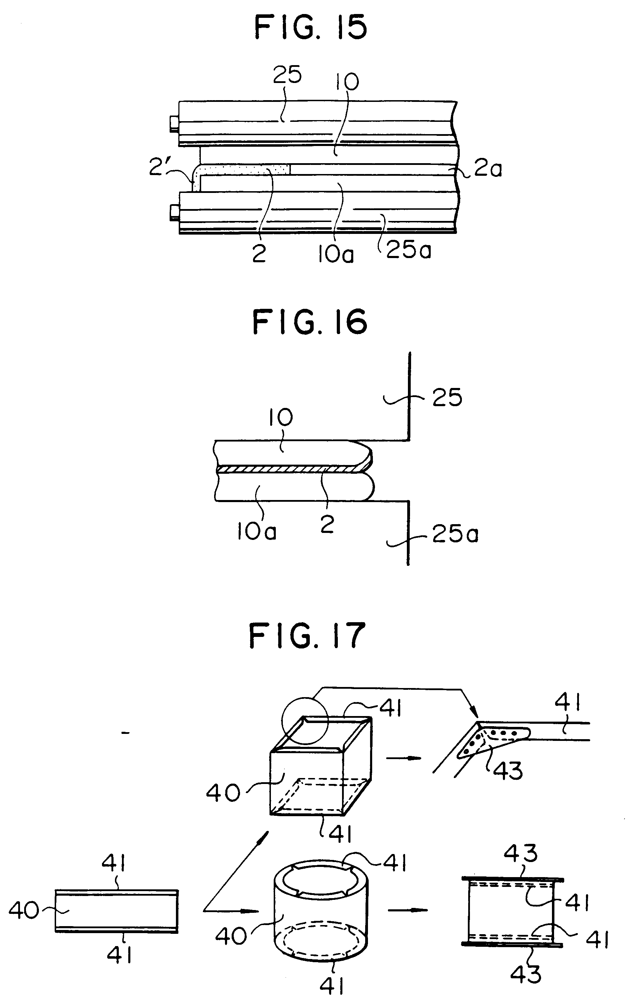

In the production of vessel-shaped member, etc., for example, as shown in FIG. 17, a drum body 40 is formed, and flanges 41 are made of the upper and lower ends 41 of the drum body 40 to weld the flanges 41 to another member 43. In that case, an electroconductive filler-containing resin can be provided in the regions at both side edges of a resin-sandwiched metal laminate and an electroconductive filler-free resin can be provided in the center region between the side edge regions. That is, it is not advantageous to provide the electroconductive filler-containing resin in the regions not destined for the welding, because the adhesiveness of the resin to the metal and the vibration damping of the resin are a little inferior to those of the electroconductive filler-free resin. Furthermore, the electroconductive filler is used wastefully in that case. And particularly in the case of an expensive filler such as nickel, etc., such disadvantages as considerably high production cost, etc. are inevitably entailed.

In the production of the resin-sandwiched metal laminate, a portion of the resin is squeezed out of both edges of the metal sheets or bands during the press-bonding, and remains as attached to the surfaces of the metal sheets or bonds to deteriorate the quality of the laminate, etc. That is, as shown in FIG. 15, when a resin 2 is provided between metal sheets or bands 10 and 10a and press-bonded by rolls 35 and 25a in the conventional process, a portion 2' of the resin 2 is squeezed out at the edges and attached to the surfaces of the metal sheets or bands 10 and 10a, because both edges of the metal sheets or bands 10 and 10a take a straight form and thus the resin is squeezed out at the edges of the metal sheets or bands during the press-bonding.

It is also known to provide a resin between metal bands and press-bond the resin between the metal bands throughout the full width in the width direction of the metal bands by pressing rolls [Japanese Patent Application Kokai (Laid-open) No. 50-27750].

However, in the production of such metal laminate, the pressing force is lighter in the regions at both side edges in the width direction of metal bands than in the center region, and this phenomenon is remarkable particularly in the case of using mill edge metal sheets. As shown in FIG. 16, when a resin 2 provided between metal bands 10 and 10a is press-bonded under a pressing force by press rolls 25 and 25a, which press the metal bands throughout the full width in the width direction of the metal bands, the resin 2 at the edge drop parts (whose one end is shown in the drawing) at both side edges in the width direction of the metal bands is not securely press-bonded between the metal bands 10 and 10a. Thus, such disadvantages as considerable deterioration of laminate quality, etc. are inevitably entailed.

It is an object of the present invention to overcome the afore-mentioned disadvantages and to provide a resin-sandwiched metal laminate having an enhanced weldability, an enhanced adhesiveness of the resin to the metal and an enhanced vibration damping and which is less expensive and to provide a process and an apparatus for producing the same.

This object is achieved with a resin-sandwiched metal laminate, a process and an apparatus according to the respective claims.

The present invention overcomes the problems of the prior art successfully.

The present invention provides a resin-sandwiched metal laminate with distinguished adhesiveness between the metal sheets or bands and resin, weldability, processability and qualities, which has an electroconductive filler-containing resin and an electroconductive filler-free resin at required parts, respectively, between the metal sheets or bands and a process for producing the same.

Hereinafter "metal sheet" will refer to both a metal sheet and a metal plate, and it will also refer to both of a metal sheet and a metal band, where a metal sheet having a large size in the longitudinal direction is called "metal band". The metal sheet has a state of cut sheet and the metal band is wound to have a state of a coil.

In the case of vibration-damping metal sheets, another advantage of the present invention is to provide a resin-sandwiched metal laminate with an improved vibration damping property and a process for producing the same.

Another advantage of the present invention is to provide a resin-sandwiched metal laminate of low cost by saving the electroconductive filler and a process for producing the same.

A further advantage of the present invention is to provide a process for producing a resin-sandwiched metal laminate with an improved adhesiveness of the resin to the metal sheets and an improved processability, capable of changing regions to be applied with an electroconductive filler-containing resin and an electroconductive filler-free resin in the width direction of metal sheets as desired, thereby providing weldable regions in accordance with members to be produced.

Still a further advantage of the present invention is to provide a process for producing a resin-sandwiched metal laminate with an improved adhesiveness of the resin film to the metal sheets and an improved quality, capable of containing an electroconductive filler only in the required regions of the resin film.

Still a further advantage of the present invention is to provide a resin-sandwiched metal laminate, capable of securely preventing the resin from squeezing out at the side edges of metal sheet, thereby preventing deterioration of quality due to resin fouling, increasing the quality, saving the resin wasted due to the squeezing-out and reducing the production cost by providing no resin in regions at predetermined distances from the side edges of metal sheets and/or by making the side edges in the width direction of at least one of face and back metal sheets, between which the resin is press-bonded, into a special shape.

Still a further advantage of the present invention is to provide a process for producing a resin-sandwiched metal laminate, capable of securely press-bonding a resin throughout the full width in the width direction of metal sheets, thereby remarkably improving the quality and the product yield by making the side edges in the width direction of metal sheets, between which the resin is press-bonded, into a special shape.

Still a further advantage of the present invention is to provide an apparatus for producing a resin-sandwiched metal laminate, capable of attaining distinguished effect such as the effect that the excess resins can be reused in the application without intermixing.

The foregoing advantages of the present invention can be attained by the following preferred embodiments of resin-sandwiched metal laminates and according to the following preferred processes and apparatus.
(1) A resin-sandwiched metal laminate, which comprises a pair of face and back metal sheets and a resin layer and is capable of passing an electricity between the face and back metal sheets, the resin layer being composed of an electroconductive filler-containing resin regions at the side edges of the resin layer in the width direction of the metal sheets and an electroconductive filler-free resin center region provided between the electroconductive filler-containing resin regions at the side edges.
(2) A resin-sandwiched laminate according to (1), wherein the electroconductive filler-containing resin regions contain at least one metal powder selected from nikel powder, iron powder, stainless steel powder and aluminum powder as the electroconductive filler.
(3) A resin-sandwiched metal laminate according to (1), wherein the electroconductive filler-containing resin regions provided at the side edges are provided at a distance of 20 mm to 300 mm each from the side edges in the width direction of the metal sheets inwardly in the width direction.
(4) A resin-sandwiched metal laminate according to (1), wherein at least one of the side edges in the width direction of at least one of a pair of the face and back metal sheets is in a convex-curved shape toward the side edge in the width direction.
(5) A resin-sandwiched metal laminate according to (1), wherein a pair of the face and back sheets are steel sheets.
(6) A resin-sandwiched metal laminate according to (5), wherein the steel sheets are steel bands.
(7) A resin-sandwiched metal laminate according to any one of (1) to (6), wherein at least one portion of the electroconductive filler-free resin center region of the resin layer in the width direction of the metal sheets is composed of the electroconductive filler-containing resin instead of the electroconductive filler-free resin.
(8) A resin-sandwiched metal laminate according to (7), wherein a width of the one portion composed of the electroconductive filler-containing resin is 20 ∼ 600 mm in the width direction of the metal sheets.
(9) A resin-sandwiched metal laminate according to any one of (1), (2) and (4) to (8), wherein the resin layer is composed of an electroconductive filler-free resin regions at the side edges of the resin layer in the width direction of the metal sheets and an electroconductive filler-containing resin center region between the electroconductive filler-free resin regions at the side edges.
(10) A process according to claim 11 which further comprises applying a resin to one side of one metal sheet, providing another metal sheet on the surface of the applied resin, and press-bonding the resin between the metal sheets,
   wherein a resin supply passage on a resin table is divided into a center region and side edge regions in the width direction of the resin table, and an electroconductive filler-containing resin and an electronconductive filler-free resin are selectively supplied to the center region and the side edge regions and then applied to one side of one metal sheet.
(11) A process according to (10), wherein the electroconductive filler-containing resin and the electroconductive filler-free resin supplied to the center region and the side edge regions on the resin table are applied to one side of one metal sheet through an intermediate roll and a coater roll from the resin table.
(12) A process according to (10) or (11), wherein the electroconductive filler-free resin is supplied to the center region on the resin table and the electroconductive filler-containing resin is supplied to the side edge regions on the resin table.
(13) A process according to (10) or (11), wherein the electroconductive filler-containing resin is supplied to the center region on the resin table and the electroconductive filler-free resin is supplied to the side edge regions on the resin table.
(14) A process according to any one of (10) to (12), wherein the electroconductive filler-containing resin is applied to side edge regions on the one side of the one metal sheet, each of which has a distance of 20 to 300 mm from the side edge inwardly in the width direction of the metal sheet, and the electroconductive filler-free resin is applied to the remaining part on the one side of the metal sheet.
(15) A process according to any one of (10) to (12) and (14), wherein the electroconductive filler-containing resin is applied to the one side of the one metal sheet excluding the side edge regions, each of which has a distance of at least 10 mm and at most 15 mm from the side edge inwardly in the width direction of the metal sheet, when the resin has a thickness of 30 to 60µm after the press-bonding.
(16) A process according to (13) or (14), wherein the electroconductive filler-free resin is applied to the one side of the one metal sheet excluding the side edge regions, each of which has a distance of at least 10 mm and at most 15 mm from the edge inwardly in the width direction of the metal sheet, when the resin has a thickness of 30 to 60 µm after the press-bonding.
(17) A process according to any one of (10) to (16), wherein at least one of the one and another metal sheets has a convex-curved shape towards the side edge in the width direction at least at one side edge in the width direction.
(18) A process according to any one of (10) to (17), wherein after the resin is provided between the metal sheets, the metal sheets are pressed in the full width in the width direction of the metal sheets by pressing rolls, thereby press-bonding the resin between the metal sheets, and then the side edge parts in the width direction of the metal sheets are pressed by rolls, thereby press-bonding the resin.
(19) A process according to any one of (10) to (18), wherein the metal sheets are steel sheets.
(20) A process according to (19), wherein the steel sheets are steel bands.
(21) A process according to any one of (10) to (20), wherein a surface of the resin which has been applied to one side of one metal sheet is provided on a surface of the resin which has been applied to one side of another metal sheet and the resins are press-bonded between the metal sheets.
(22) A process according to claim 11 which further comprises providing a film resin between metal sheets and press-bonding the film resin between the metal sheets,
   wherein a resin supply passage of resin discharge nozzle is divided into a center region and side edge regions in the width direction of the resin discharge nozzle, an electroconductive filler-containing resin and an electroconductive filler-free resin are selectively supplied to the center region and the side edge regions and discharged from the nozzle, thereby forming a film resin composed of the resins and the film resin is provided between the metal sheets.
(23) A process according to (22), wherein the film resin discharged from the nozzle, to which the resins are selectively supplied, is cooled and adjusted to a desired film thickness by a cooling roll, wound in a coil form together with a separating paper, thereby making a resin film, and the resin film is supplied to a resin-sandwiched metal laminate production facility and provided between the metal sheets.
(24) A process according to (22) or (23), wherein the electroconductive filler-free resin is supplied to the center region of the resin discharge nozzle and the electroconductive filler-containing resin is supplied to the side edge regions of the resin discharge nozzle.
(25) A process according to (22) or (23), wherein the electroconductive filler-containing resin is supplied to the center region of the resin discharge nozzle and the electroconductive filler-free resin is discharged to the side edge regions of the resin discharge nozzle.
(26) A process according to any one of (22) to (24), wherein the resin film is provided between the metal sheets in such a manner that the electroconductive filler-containing resin is provided in side edge regions, each of which has a distance 20 to 300 mm from the side edge inwardly in the width direction of the metal sheets and which are formed between the metal sheets, and the electroconductive filler-free resin is provided in the center region, which is the remaining part in the width direction of the metal sheets and which is formed between the metal sheets.
(27) A process according to any one of (22) to (26), wherein the electroconductive filler-containing resin is provided between the metal sheets in such a manner of excluding side edge regions, each of which has a distance of at least 10 mm and at most 15 mm from the side edge inwardly in the width direction of the metal sheets, when the resin film has a thickness of 30 to 60 µm after the press-bonding.
(28) A process according to (22) or (26), wherein the electroconductive filler-free resin is provided between the metal sheets in such a manner of excluding side edge regions, each of which has a distance of at least 10 mm and at most 15 mm from the side edge inwardly in the width direction of the metal sheets, when the resin film has a thickness of 30 to 60 µm after the press-bonding.
(29) A process according to any one of (22) to (28), wherein at least one of the one and another metal sheets has a convex-curved shape towards the side edge in the width direction at least at one side edge in the width direction.
(30) A process according to any one of (22) to (29), wherein after the resin film is provided between the metal sheets, the metal sheets are pressed in the full width in the width direction of the metal sheets by pressing rolls, thereby press-bonding the resin between the metal sheets, and then the side edge parts in the width direction of the metal sheets are pressed by rolls, thereby press-bondling the resin.
(31) A process according to any one of (22) to (30), wherein the metal sheets are steel sheets.
(32) A process according to (31), wherein the steel sheets are steel bands.
(33) A process according to any one of (22) to (32), wherein a surface of the film resin which has been provided on one side of one metal sheet is provided on a surface of the film resin which has been provided on one side of another metal sheet and the film resins are press-bonded between the metal sheets.
(34) A process for producing a resin film for a resin-sandwiched metal laminate, which comprises dividing a resin discharge passage of resin discharge nozzle into a center region and side edge regions and selectively supplying an electroconductive filler-containing resin and an electroconductive filler-free resin to the center region and the side edge regions, thereby making a film resin composed of the resins.
(35) A process according to (34), wherein the film resin discharged from the nozzle, to which the resins are selectively supplied, is cooled and adjusted to a desired film thickness by a cooling roll and wound in a coil form together with a separating paper, thereby making a resin film.
(36) A process according to (34), wherein the resin-sandwiched metal laminate is a resin-sandwiched steel sheet laminate.
(37) A process according to (35), wherein the steel sheet laminate is a steel band laminate.
(38) A process according to claim 11 which further comprises the steps of: applying a resin to one side of one metal sheet, placing another metal sheet on the surface of the applied resin and press-bonding the resin between the metal sheets or the steps of: providing a film resin between the metal sheets and press-bonding the film resin between the metal sheets, where the resin is provided in a center region in such a manner of excluding side edge regions, each of which is formed in the width direction of the metal sheets and between the metal sheets, and the resin is press-bonded between the metal sheets.
(39) A process according to (38), wherein the resin is provided in the center region in such a manner of excluding the side edge regions each of which has a distance of at least 10 mm and at most 15 mm from the side edge inwardly in the width direction of the metal sheets, when the resin has a thickness of 30 to 60 µm after the press-bonding.
(40) A process according to claim (38), wherein the metal sheets are steel sheets.
(41) A process according to (40), wherein the steel sheets are steel bands.
(42) A process according to claim 11 which further comprises the steps of: applying a resin to one side of one metal sheet, placing another metal sheet on the surface of the applied resin and press-bonding the resin between the metal sheets or the steps of: providing a film resin between the metal sheets and press-bonding the resin between the metal sheets, where each of the metal sheets has a convex-curved shape towards the side edges at both side edges in the width direction of the metal sheet, and the resin is provided between the metal sheets and press-bonded between the metal sheets.
(43) A process according to (42), wherein one of the metal sheets has a convex-curved shape toward side edges at both side edges in the width direction of the metal sheet and the another metal sheet has a straight shape at both side edges in the width direction of the metal sheet.
(44) A process according to (42) or (43), wherein the metal sheets are steel sheets.
(45) A process according to (44), wherein the steel sheets are steel bands.
(46) A process according to claim 11 which further comprises providing a resin between metal sheets, pressing the metal sheets in the full width in the width direction of the metal sheets by pressing rolls, thereby press-bonding the resin between the metal sheets, and then pressing both side edge parts in the width direction of the metal sheets by rolls, thereby press-bonding the resin.
(47) A process according to (46), wherein the metal sheets are steel sheets.
(48) A process according to (47), wherein the steel sheets are steel bands.
(49) A process according to claim 11 which comprises providing a resin between metal sheets, pressing both side edges in the width direction of the metal sheets by rolls, thereby press-bonding the resin between the metal sheets, and then pressing the metal sheets in the full width in the width direction by pressing rolls, thereby press-bonding the resin between the metal sheets.
(50) A process according to (49), wherein the metal sheets are steel sheets.
(51) A process according to (50), wherein the steel sheets are steel bands.
(52) An apparatus for producing a resin-sandwiched metal laminate by applying a resin to one side of one metal sheet, placing another metal sheet on the surface of the applied resin and press-bonding the resin between the metal sheets, the apparatus having a resin-applying means which comprises:
   resin supply passages formed by dividing a resin supply passage into a center region and side edge regions on a resin table in the width direction of the resin table,
   a resin tank for supplying an electroconductive filler-containing resin to one of the resin supply passages through an electroconductive filler-containing resin line,
   another resin tank for supplying an electroconductive filler-free resin to the remaining resin supply passage through an electroconductive filler-free resin line,
   a resin table for selectively supplying the electroconductive filler-containing resin and the electroconductive filler-free resin to a resin coater roll through a pick-up roll,
   a resin coater roll for coating the selectively supplied resins to one side of one metal sheet,
   a resin receiver for recovering excess resin supplied to the resin supply passage formed in the center region on the resin table,
   resin receivers for recovering excess resin supplied to the resin supply passages formed in side edge regions on the resin table, and
   separators for recovering the electroconductive filler-containing resin and the electroconductive resin-free resin supplied in excess to the pickup roll and the coater roll without intermixing of the resins, provided at boundary positions of the resins.
(53) An apparatus according to (52), wherein the resin supply passages formed in the side edge regions on the resin table have a resin supply outlet to the pickup roll surface.
(54) An apparatus according to (52), wherein the resin receivers for recovering the excess resin supplied to the resin supply passage formed in the side edge regions on the resin table are troughs and the separators are partition plates provided at the upper parts on both sides of the troughs.
(55) An apparatus according to (52), wherein resin return lines for returning the excess resin from the resin receivers to the respective resin tanks are further provided.
(56) An apparatus according to (52), wherein the metal sheets are steel sheets.
(57) An apparatus according to (56), wherein the steel sheets are steel bands.

FIGS. 1(a) and 1(b) show a schematic view showing one embodiment of a resin-sandwiched metal laminate according to the present invention, where FIG. 1(a) is a plan view and FIG. 1(b) is a front view in the width direction.

FIG. 2 is a schematic view showing one embodiment of an apparatus for producing a resin-sandwiched metal laminate according to the present invention and FIG. 3 is a schematic cross-sectional side view of the essential part of FIG. 2 as seen from the arrow I-I of FIG. 2.

FIG. 4 is a schematic side view showing one embodiment of producing a resin film for a resin-sandwiched metal laminate according to the present invention and FIG. 5 is a schematic front view of the essential part of FIG. 4.

FIG. 6 is a front view showing one embodiment of carrying out the present process.

FIG. 7 is a front view showing a preferable embodiment of the present process, and FIG. 8(a) and 8(b) are a front view showing the other preferable embodiments of the present process.

FIG. 9 is a schematic cross-sectional view showing the side edges in the width direction of a resin-sandwiched metal laminate according to one preferable embodiment of the present invention.

FIG. 10 is a schematic front view showing one embodiment of an apparatus for producing a resin-sandwiched metal laminate according to the present invention, FIG. 11 is a schematic cross-sectional side view as seen from the arrow II-II of FIG. 10 and FIG. 12 is a schematic view showing provision of separators as seen from the arrow III-III of FIG. 11.

FIGS. 13 and 14 are a schematic view showing one embodiment of a process for producing a resin-sandwiched metal laminate according to the present invention, respectively.

FIG. 15 is a front view showing one embodiment of the conventional process for producing a resin-sandwiched metal laminate with respect to the present invention shown in FIGS. 7, 8(a) and 8(b).

FIG. 16 is a schematic cross-sectional view showing the side edges in the width direction of a resin-sandwiched metal laminate according to the conventional process with respect to the present invention shown in FIG. 9.

FIG. 17 shows a schematic view showing one embodiment of the conventional process for producing a vessel-shaped member by welding.

In the present invention, the resin supply passage on a resin table is divided in the width direction of the resin table in a center region and side edge regions at both side edges and the resin is selectively supplied to these regions and applied to one side of a metal sheet from the resin table by rolls. Then, another metal sheet is placed on the resin-applied surface and the metal sheets are press-bonded to make a resin-sandwiched metal laminate.

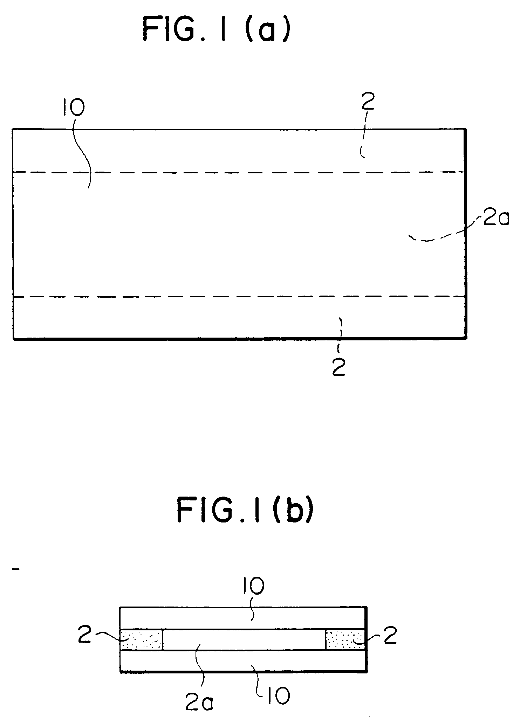

In the case of a vessel-shaped member requiring a weldability only at the upper and lower ends, an electroconductive filler-containing resin is supplied to the side edge regions at the side edges of the resin table and an electroconductive filler-free resin is supplied to the center region, and these resins are applied to one side of a metal sheet by rolls and another metal sheet is placed on the resin-applied surface. Then, the metal sheets are press-bonded to make a resin-sandwiched metal laminate provided with the electroconductive filler-containing resin 2 at the side edge regions in the width direction of metal sheet (steel sheet) 10 and the electroconductive filler-free resin 2a in the center region in the width direction of metal sheet 10, as shown in FIGS. 1(a) and 1(b).

In the case of giving a weldability only to the center region in the width direction of metal sheet to connect one member to another, etc., the electroconductive filler-containing resin is supplied to the center region and the electroconductive filler-free resin to the side edge regions to separately apply the resins to one side of a metal sheet, and then another metal sheet is placed on the resin-applied surface. The metal sheets are press-bonded to make a resin-sandwiched metal laminate.

The metal sheet for use in the present invention includes, for example, steel sheets, aluminum sheets copper sheets, titanium sheets, tin sheets, stainless steel sheets, coated steel sheet, various plated sheets, surface treated steel sheets, etc. which are 0.2 to 1.0 mm thick and 600 to 1830 mm wide. The length is not limited in the case of metal bands. In the case of metal sheets, the length is 700 to 3200 mm.

The resin for use in the present invention includes, for example, usually available synthetic resins such as polyester, polyethylene, polyisobutylene, polyolefin system, etc., viscoelastic resins, solvent-type resins, film resins, etc., and the resin layer is 30 to 60 µm thick before the press-bonding and will be 30 to 60 µm after the press-bonding.

The electroconductive filler for use in the present invention includes, for example, electroconductive powders of iron, nickel, aluminum, stainless steel, etc., and any materials can be used so long as they render electroconductivity between the face and back metal sheets. The particle size is 40 to 90 µm in diameter. For example, powders having a larger particle size than the thickness of the resin layer can be used, where the particle size can be made equal to the thickness of the resin layer by press-bonding the metal sheets to bring the powder into contact with the face and back metal sheets and make sure of the electroconductivity.

In the present invention, the electroconductive filler-containing resin is applied to the side edge regions of the resin-sandwiched metal laminate, and the content of the electroconductive filler in the resin is 15 to 30% by weight which can make the laminate electroconductive. The width of the electroconductive filler-containing resin region depends on uses and a width of at least 5 to 90 mm in the width direction from the edge of the metal sheet inwardly before the press-bonding can give a good weldability. The wider the width of the electroconductive filler-free resin region, the better the adhesiveness of the resin to metal sheets and higher the vibration damping. The smaller the width of the electroconductive filler-containing resin region, the lower the production cost.

In the present invention, the press-bonding means the ordinary press-bonding and includes press-bonding with heating.

An example of producing the present resin-sandwiched metal laminate will be given below.

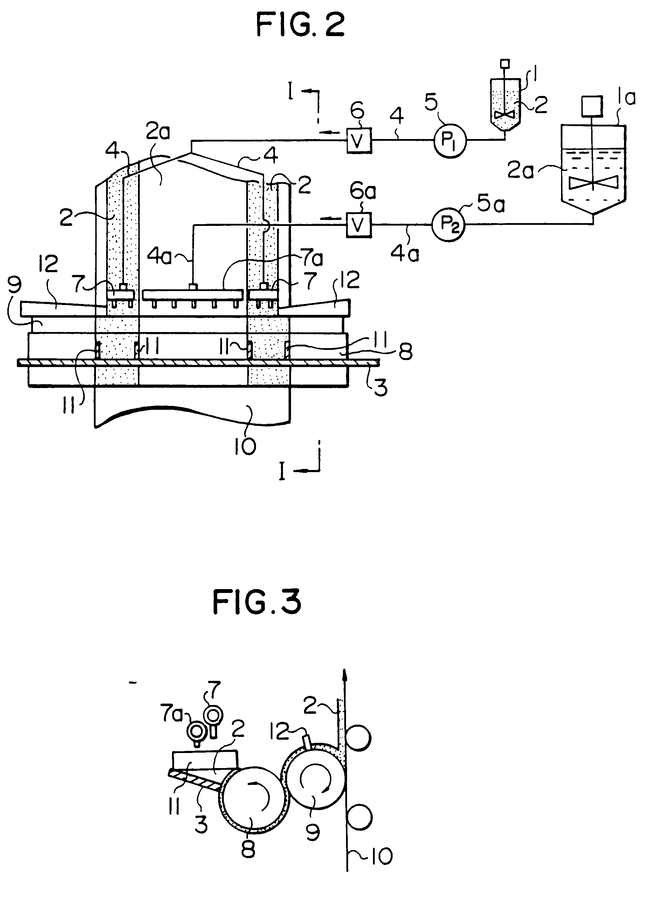

In FIGs. 2 and 3, an electroconductive filler-containing resin 2 is filled in a tank 1 and an electroconductive filler-free resin 2a is filled in another tank 1a. The electroconductive filler-containing resin 2 is supplied to the side edge regions of a resin table 3 from resin supply passages 4 provided at both side edges in the width direction of the resin table 3 through a pump 5, a valve 6 and nozzles 7. On the other hand, the electroconductive filler-free resin 2a is supplied to the center region of the resin table 3 from a resin supply passage 4a provided in the center region of the width direction of the resin table through a pump 5a, a valve 6a and a nozzle 7a. The resins supplied to the resin table 3 are applied to a metal sheet 10 through an intermediate roll 8 and a coat roll 9. That is, the electroconductive filler-containing resin 2 is applied to the side edge regions of the metal sheet 10 and the electroconductive filler-free resin 2a to the center region of metal sheet 10.

The amount of the resins to be applied is adjusted by adjusting a distance between the intermediate roll 8 and the coating roll 9. In Figs. 2 and 3, numeral 11 is separators for separating the regions 2 and 2a from each other, and 12 is edge knives for making both edges of metal sheet 10 free from coating of the resin.

When the electroconductive filler-containing resin is applied to the center region of metal sheet 10 and the electroconductive filler-free resin to the side edge regions, the electroconductive filler-free resin is filled in the tank 1 and the electroconductive filler-containing resin in the tank 1a, and the resins are supplied to the resin table 3 separately and the electroconductive filler-containing resin is applied to the center region of metal sheet 10 and the electroconductive filler-free resin to the side edge regions through the coating roll 9, as described above.

When the resin is applied to both side edges of metal sheet, a portion of the resin sometimes flows out from the side edges during the transportation, storing, etc. and attaches to the surface edge parts of the laminate to deteriorate the laminate quality. Thus, it is preferable to provide edge knives 12 at both of the side edges of coater roll or intermediate roll to remove the resin from the side edges and make the side edges of metal sheet free from the coating of resin at a distance of about 10 mm from the side edges inwardly.

After the application of the resin to the metal sheet, another metal sheet is placed on the resin-applied surface and press-bonded to make a resin-sandwiched metal laminate.

### EXAMPLE 1

1) Steel sheet thickness: 0.45 mm (the same thickness for both sheets)
2) Resin: polyester system (layer thickness: 43 µm)
3) Electroconductive filler: nickel powder; mixing ratio of the nickel powder to the resin: 25%; average particle size: 60 µm (which was reduced to 43 µm by press-bonding of the steel sheets).
4) Resin-sandwiched metal laminate:
   (1) Width: 860 mm
   (2) Layout of electroconductive filler-containing resin arrangement: 80 mm from both edges of the steel sheet inwardly in the width direction of the steel sheet (continuous arrangement in the longitudinal direction of the steel sheet)
5) Loss coefficient: 0.270 (50°C)

### COMPARATIVE EXAMPLE 1

A resin-sandwiched metal laminate provided with an electroconductive filler-containing resin on the entire surface of the steel sheet under the same conditions as in Example 1 was produced.

The loss coefficient was 0.220 (50°C).

Thus, the vibration damping of the resin-sandwiched metal laminate could be improved.

Another example of producing a resin-sandwiched metal laminate according to the present invention will be given below.

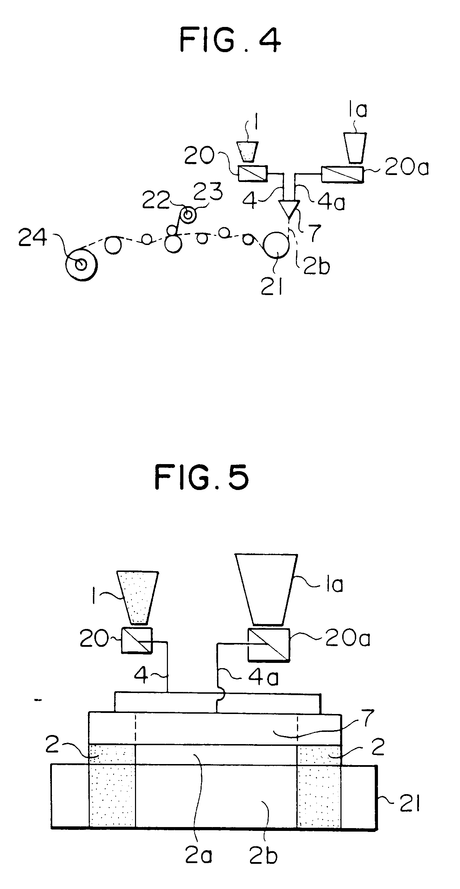

In FIGS. 4 and 5, a granular electroconductive filler-containing resin 2 is filled in a hopper 1 and a granular electroconductive filler-free resin 2a is filled in another hopper 1a. The resins 2 and 2a are transferred from the respective hoppers 1 and 1a to resin melting and pumping means 20 and 20a respectively. The melted electroconductive filler-containing resin 2 is supplied to side edge regions of resin discharge nozzle 7 from the means 20 through supply passages 4 to the side edge regions in the width direction of resin discharge nozzle 7. On the other hand, the melted electroconductive filler-free resin 2a is supplied to the center region of nozzle 7 from the means 20a through a supply passage 4a to the center region in the width direction of nozzle 7.

Then, the electroconductive filler-containing resin 2 from the side edge regions of nozzle 7 and the electroconductive filler-free resin 2a from the center region of nozzle 7 are continuously discharged in a state of film 2b, and the film 2b is cooled on a cooling roll 21 and at the same time, the film thickness is adjusted by controlling the revolution speed of roll 21. In order to prevent the film 2b from any breakage, a separating paper 23 is provided on the film 2b from a rewinding reel 22 and then the film 2b provided with the separating paper 23 is wound onto a winding reel 24 in a coil state and then transferred to a resin-sandwiched metal laminate production line.

When the center region of resin film 2b is made from the electroconductive filler-containing resin and the side edge regions of resin film 2b are made from the electroconductive filler-free resin, the electroconductive filler-containing resin is filled in the hopper 1a and supplied to the center region of nozzle 7 through the supply passage 4a, while the electroconductive filler-free resin is filled in the hopper 1 and supplied to the side edge regions of nozzle 7 through the supply passage 4.

The resin discharge nozzle 7 is composed of, for example, independent nozzles each for discharging the electroconductive filler-containing resin and the electroconductive filler-free resin, arranged or constructed in one body, so as to supply and discharge the electroconductive filler-containing resin and the electroconductive filler-free resin as separated in the width direction of resin discharge nozzle 7 to make a film.

A preferable example of producing a resin-sandwiched metal laminate according to the present invention will be given below.

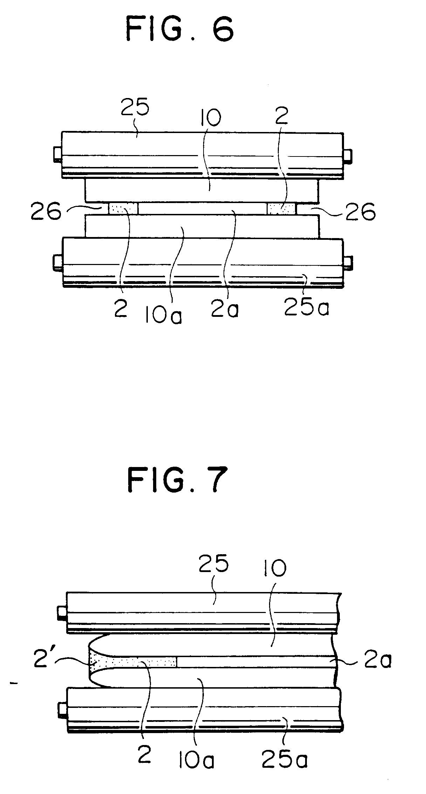

In FIG. 6, resins 2, 2a are provided in the center region excluding the side edge regions 26 in the width direction between metal sheets 10 and 10a and the metal sheets are press-bonded to each other by rolls 25 and 25a. A portion of the resin 2 in the center region moves towards the side edge regions 26 by the press-bonding and the resins 2, 2a are uniformly distributed in the width direction between the metal sheets 10 and 10a by the press-bonding.
That is, a portion of the resin 2 in the center region moves towards the side edge regions 26 and the resin 2 is uniformly distributed throughout between the metal sheets 10 and 10a to securely prevent the squeezing-out of the resin 2 at both ends of the metal sheets. The range of side edge regions 26 which are free from the resin 2 is preferably at most 15 mm from the both edges inwardly (towards the center) in the width direction of metal sheets when the resin layer 2, 2a has a thickness of 30 to 500 µm after the press-bonding. Over 15 mm, the resin 2 sometimes fails to uniformly move to the side edge regions 26 when press-bonded. That is, the resin 2 is not uniformly distributed to the side edge regions 26. When the resin 2 is provided in a range of side edge regions 26 of not more than 10 mm from the edges of metal sheets and press-bonded, a portion of the resin 2 is squeezed out of the edges of metal sheets and attached to the surfaces of metal sheets to deteriorate the quality of laminate.

The foregoing embodiment of the present invention is given in the following Example 2.

### EXAMPLE 2

An epoxy system resin (solvent type) was applied to the center region (excluding side edge regions of 10 mm from the edges inwardly in the width direction of steel band) on one side of a steel band, which has a thickness of 0.4 mm, and a width of 1,000 mm as a metal sheet, to a thickness of 43 µm and dried and then another steel band, which has a thickness of 0.4 mm, and a width of 1,000 mm was placed on the resin surface at 190°C. The steel bands were press-bonded under a pressing force of 5000 kg by rolls, whereby the resin layer having a thickness of 43 µm was distributed to the full width of steel bands. In this manner, 100 tons of a resin-sandwiched steel laminate was continuously produced without any squeezing of the resin out of the edges of steel bands.

In the following, other examples of producing a resin-sandwiched metal laminate will be given.

Those examples are given for reference only, since the laminates involved therein do not exhibit the co-presence of a filler-containing and a filler-free resin, and they are thus outside of the scope of the invention. They will be therefore labelled as *Reference Examples*.

In FIG. 7, side edge regions of both metal sheets 10 and 10a (including other side edge regions not shown in Fig. 7) are made to take convex-curved shapes towards the edges, whereby the resin 2' can be retained in a larger clearance in the side edge regions between the metal sheets 10 and 10a than the clearance in the center region in the width direction of metal sheets 10 and 10a without any squeezing out of the edges, when the resins 2, 2a are press-bonded.

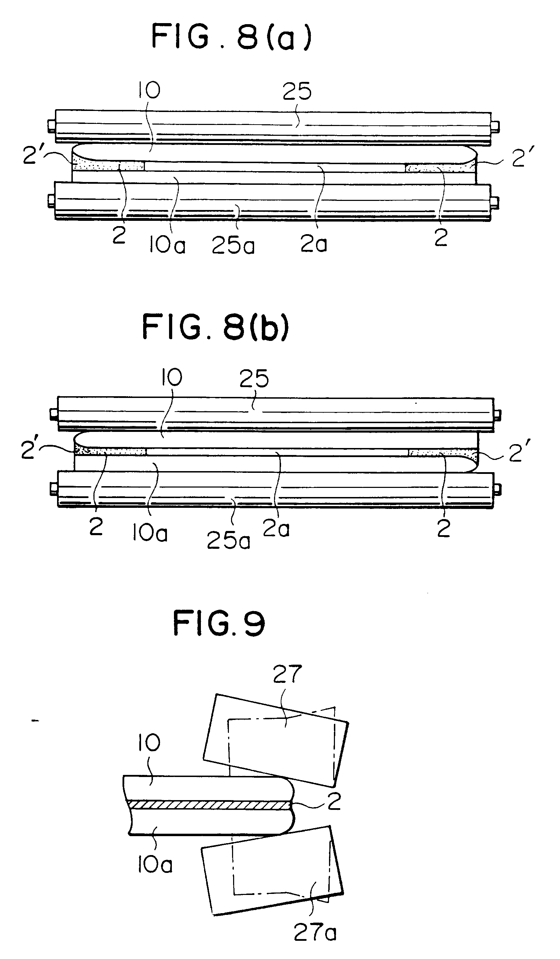

As shown in FIGS. 8(a) and 8(b), only one metal sheet 10 of Fig. 7 is made to have a convex-curved shape in the side edge regions towards the side edges and make the clearance in the side edge regions between the metal sheets 10 and 10a larger than the clearance in the center region in the width direction of metal sheets 10 and 10a. During the press-bonding, the resin 2' can be retained in the larger clearance without squeezing of the resin 2' out of the side edges.

A convex-curved, round shape toward the side edges can be formed in the side edge regions of metal sheets 10 and 10a, for example, by trimming (shearing) edges and rolling the edges under a light pressing force. Otherwise, edge drops are generated during the continuous rolling of a metal band and the edge has a convex-curved shape suitable for retaining the resin. Thus, after the rolling, the metal band can be transferred to a resin-sandwiched metal laminate production line without trimming the edges, whereby the squeezing of the resin out of the edges can be securely prevented.

Preferable range of convex-curved shape of the edges is 1 to 2 mm from the side edges inwardly in the width direction of metal sheets.

### REFERENCE EXAMPLES 1, 2 AND 3

Reference Examples 1 and 2 are given in Table 1 together with Reference Example 3 (comparative).

**Table 1**

| Reference Ex. No. | Metal sheet | | | Resin | | Pressing force | Squeezing-out of resin |
|---|---|---|---|---|---|---|---|
| | Species | Thickness | Width | Species | Thickness | | |
| 1 | Steel sheet | 0.4mm | 914mm | Epoxy-cross-linked | 43µm | 5,000kg | none |
| 2 | " | " | " | " | " | " | " |
| 3 | " | " | " | " | " | " | occurred |

Note 1: The metal bands were prepared by continuously cold rolling hot-rolled steel sheets, which have a thickness of 1.2 mm, to a thickness of 0.8 mm and further temper rolling the cold-rolled steel sheets to a thickness of 0.4 mm and used without trimming the edges of the steel bands. The resin was applied to one side of one steel band to the full width to a thickness of 43 µm in the form of solution in a solvent and another steel band was placed on the resin-applied surface. Press-bonding of the steel bands was carried out at 190°C.

Note 2: Reference Example 1 is directed to use of steel bands both having a convex-curved shape (as in edge drop states) at the edges without trimming the edges after the rolling.

Reference Example 2 is directed to use of one steel band having a convex-curved shape (as in edge drop states) as in Reference Example 1 and the use of another steel band in a full straight side state after trimming the edges after the rolling.

Reference Example 3 (comparative) is directed to use of both steel bands in a full straight side state after trimming the edges after the rolling.

A further preferable example of producing a resin-sandwiched metal laminate is given below.

As shown in FIG. 9, a resin 2 is provided between metal sheets 10 and 10a and the edge parts are pressed by rolls 27 and 27a to press-bond the resin 2 securely between the metal sheets 10 and 10a, where only edges on one side is shown.

A resin, such as a film resin or a solvent-type resin, is provided between metal sheets and the edge parts of the metal sheets are pressed by rolls at an inlet side or outlet side of pressing rolls when the metal sheets are pressed to the full width in the width direction of metal sheets to press-bond the resin between the metal sheets, whereby the resin in the side edge regions is securely press-bonded. When the pressing rolls are arranged in a plurality of pairs, the edge parts can be pressed between one pair of rolls and another pair, whereby a satisfactory effect can be obtained.

The foregoing embodiments are given in the following Reference Examples 4 and 5 together with Reference Example 6 (comparative).

### REFERENCE EXAMPLE 4

A solvent-type resin (epoxy-based) was provided between steel bands (sheets), which had a thickness of 2.0 mm and a width of 954 mm, to a thickness of 45 µm and passed through two pairs of pressing rolls (roll diameter: 550 mm; roll length: 2,100 mm) to press the steel bands to the full width in the width direction of steel bands under a pressing force (linear pressure) of 60 kg/cm at a temperature of 200°C and a sheet-passing speed of 10 mpm; and then the side edge parts, 20 mm, from the edge inwardly of steel bands were pressed by a pair of rolls (roll diameter: 110 mm) under a pressing force (linear pressure) of 80 kg/cm at the outlet side of the two pairs of the pressing rolls, whereby the resin at the side edge parts was securely press-bonded between the steel bands.

### REFERENCE EXAMPLE 5

Steel bands were pressed under the same conditions as in Reference Example 4 except that the same side edge parts in the width direction of the steel bands were pressed by the pair of rolls at the inlet side of the two pairs of the pressing rolls (similarly to the case of the outlet side thereof) while pressing the steel bands to the full width in the width direction of the steel bands by the two pairs of the pressing rolls, whereby the resin at the side edge parts was securely press-bonded between the steel bands.

### REFERENCE EXAMPLE 6 (COMPARATIVE)

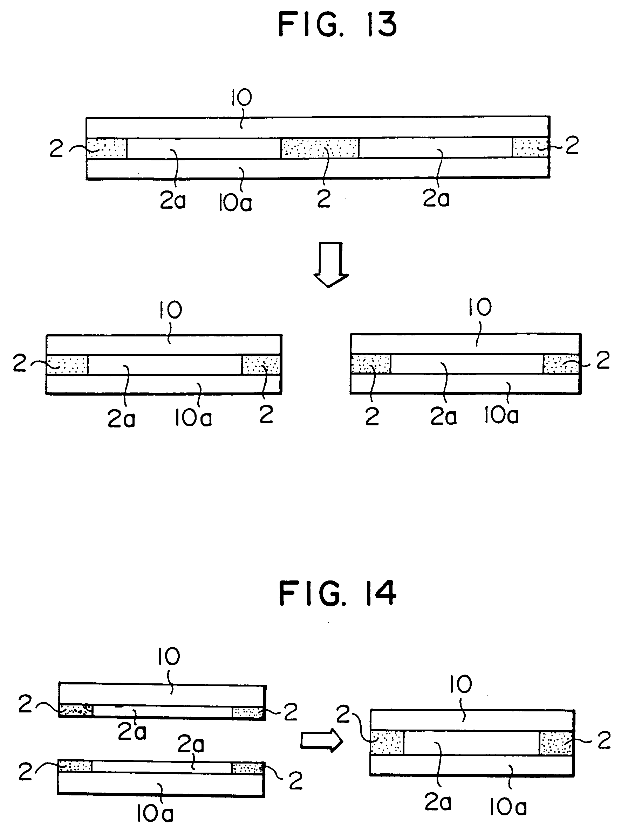

Steel bands were pressed under the same conditions as in Reference Example 4 except that the same side edge parts in the width direction of the steel bands were not pressed by the pair of rolls at either the inlet side or the outlet side of the two pairs of the pressing rolls, and the resin at the side edge parts in the width direction of the steel bands was not securely press-bonded, as shown in Fig. 14.

A preferable example of an apparatus for producing a resin-sandwiched metal laminate according to the present invention will be given below.

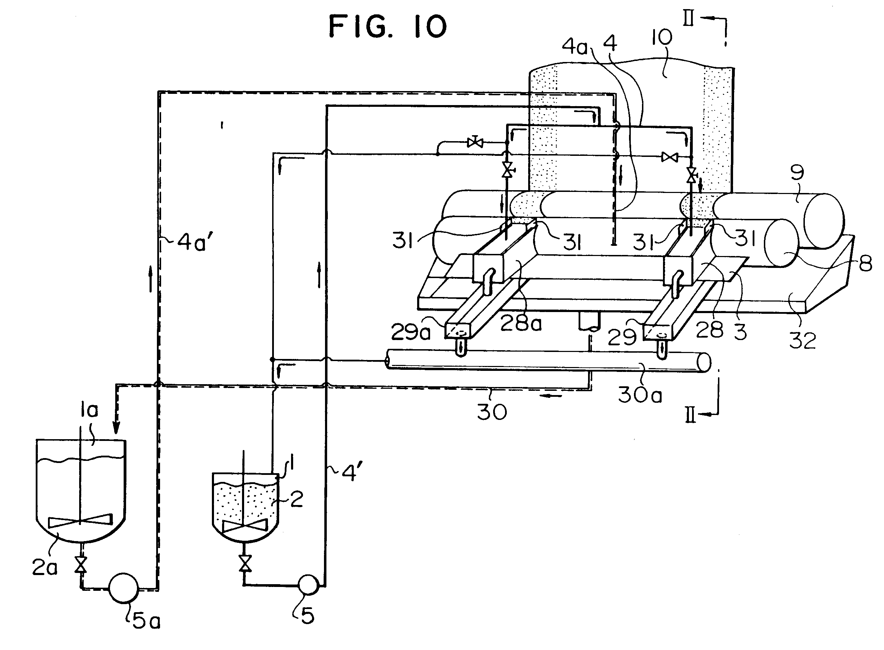

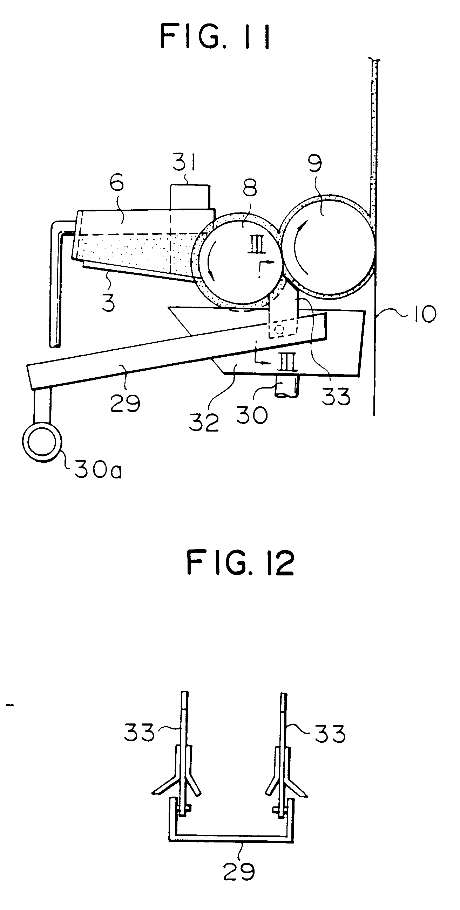

In FIG. 10 and 11, an electroconductive filler-containing resin 2 is filled in a resin tank 1 and supplied to measure (or boxes) 28 and 28a provided at both edge parts in the width direction of a resin table 3 from a supply line 4' through a pump 5 and a manifold 4, and picked up from the measures 28 and 28a onto a pickup roll 8 and applied to both side edge regions of a metal sheet 10 through a coater roll 9. Excess resin 2 is returned to the resin tank 1 from the measures 28 and 28a, which have a shape as shown in Figs. 10 and 11, through troughs 29 and 29a and a line 30a. Teflons plates (or separators) 31 are provided at both sides of each of the measures 28 and 28a and brought into contact with the pickup roll 8 and the resin table 3 to prevent the resins from inflowing and flowing out.

On the other hand, an electroconductive resin-free resin 2a is filled in another resin tank 1a and supplied to a resin table 3 in the center region in the width direction of the resin table 3 from supply lines 4a' and 4a through a pump 5a, picked up onto the pickup roll and applied to the center region of the metal sheet 10 through a coater roll 9.

Then, the applied resins 2 and 2a are dried, and another metal sheet (not shown in the drawings) is placed on the resin-applied surface and press-bonded to make a resin-sandwiched metal laminate.

Excess resin 2a supplied to the center region of the resin table 3 falls into a vessel 32 and is returned to the resin tank 1a from the vessel 32 through a line 30.

In order to prevent the electroconductive filler-containing resin 2 in the side edge regions in the width direction and the electroconductive filler-free resin 2a in the center region, each of which falls from the pickup roll 8 and the coater roll 9, from intermixing, separators 33 are provided at boundary positions between the electroconductive filler-containing resin 2 and the electroconductive filler-free resin 2a, as shown in FIG. 11 and 12, that is, on both sides each of troughes 29 and 29a, as shown in FIG. 12.

As described above, the resin supply passages 4 and 4a are provided separately to correspond to the side edge regions and the center region in the width direction of the resin table 3, and lines 4', 4a', 30 and 30a are provided for the resins 2 and 2a between the resin supply passages 4 and 4a and the resin tanks 1 and 1a, and separators 33 are provided at the resin boundary positions between the pickup roll 8 and the coater roll 9 in the present invention.

Another example of producing a resin-sandwiched metal laminate according to the present invention will be given below.

In FIG. 13, a resin-sandwiched metal laminate, which has a resin layer composed of the electroconductive filler-containing resin 2 and the electroconductive filler free resin 2a between metal sheets 10, 10a, is produced, the width of the resin 2 in the center region being two times as that of the resin 2 in the side edge regions, and then the produced resin-sandwiched metal laminate is divided into two portions.

Another example of producing a resin-sandwiched metal laminate according to the present invention will be given below.

In FIG. 14, two metal sheets 10, 10a, each of which has a resin layer composed of the electroconductive filler-containing resin 2 and the electroconductive filler free resin 2a, are prepared. And a surface of the resin layer of the metal sheet 10 is provided on a surface of the resin layer of the metal sheet 10a, and then the resin layers are press-bonded between the metal sheets 10, 10a. As the resin 2, 2a, for example, polyisobutylene system resin is used.

## Claims

1. A resin-sandwiched laminate comprising a resin layer (2, 2a) arranged between two metal sheets or bands wherein the resin layer (2, 2a) is electroconductive and contains a filler at parts of the laminate to be welded and is filler-free at the other parts between the sheets or bands.

2. A resin-sandwiched laminate according to claim 1 which comprises a pair of face and back metal sheets and a resin layer and is capable of passing electricity between the face and back metal sheets, the resin layer being composed of an electroconductive filler-containing resin regions at the side edges of the resin layer in the width direction of the metal sheets and an electroconductive filler-free resin center region provided between the electroconductive filler-containing resin regions at the side edges.

3. A resin-sandwiched laminate according to claim 2, wherein the electroconductive filler-containing resin regions contain at least one metal powder selected from nickel powder, iron powder, stainless steel powder and aluminum powder as the electroconductive filler.

4. A resin-sandwiched laminate according to claim 2 or 3, wherein the electroconductive filler-containing resin regions provided at the side edges are provided at a distance of 20 mm to 300 mm each from the side edges in the width direction of the metal sheets inwardly in the width direction.

5. A resin-sandwiched laminate according to any of claims 2 to 4, wherein at least one of the side edges in the width direction of at least one of a pair of the face and back metal sheets is in a convex-curved shape toward the side edge in the width direction.

6. A resin-sandwiched laminate according to any of claims 2 to 5, wherein the face and back sheets are steel sheets.

7. A resin-sandwiched laminate according to claim 6, wherein the steel sheets are steel bands.

8. A resin-sandwiched laminate according to any one of claims 2 to 7, wherein at least one portion of the electroconductive filler-free resin center region of the resin layer in the width direction of the metal sheets is composed of the electroconductive filler-containing resin instead of the electroconductive filler-free resin.

9. A resin-sandwiched laminate according to claim 8, wherein the width of the one portion composed of the electroconductive filler-containing resin is 20 mm to 600mm in the width direction of the metal sheets.

10. A resin-sandwiched laminate according to claim 1 and, wherein the resin layer is composed of an electroconductive filler-free resin region at the side edges of the resin layer in the width direction of the metal sheets and an electroconductive filler-containing resin center region between the electroconductive filler-free resin regions at the side edges.

11. A process for producing a resin-sandwiched laminate comprising a resin layer arranged between two metal sheets or bands with the steps of providing between the sheets or bands an electroconductive filler-containing resin at parts of the laminate to be welded and providing an electroconductive filler-free resin at the other parts.

12. A process according to claim 11 which comprises applying a resin to one side of one metal sheet, providing another metal sheet on the surface of the applied resin, and press-bonding the resin between the metal sheets,
wherein a resin supply passage on a resin table is divided into a center region and side edge regions in the width direction of the resin table, and an electroconductive filler-containing resin and an electroconductive filler-free resin are selectively supplied to the center region and the side edge regions and then applied to one side of one metal sheet.

13. A process according to claim 12, wherein the electroconductive filler-containing resin and the electroconductive filler-free resin supplied to the center region and the side edge regions on the resin table are applied to one side of one metal sheet through an intermediate roll and a coater roll from the resin table.

14. A process according to claim 12 or 13, wherein the electroconductive filler-free resin is supplied to the center region on the resin table and the electroconductive filler-containing resin is supplied to the side edge regions on the resin table.

15. A process according to claim 12 or 13, wherein the electroconductive filler-containing resin is supplied to the center region on the resin table and the electroconductive filler-free resin is supplied to the side edge regions on the resin table.

16. A process according to any one of claims 12 to 14, wherein the electroconductive filler-containing resin is applied to side edge regions on the one side of the one metal sheet, each of which has a distance of 20 to 300 mm from the side edge inwardly in the width direction of the metal sheet, and the electroconductive filler-free resin is applied to the remaining part on the one side of the metal sheet.

17. A process according to any one of claims 12 to 14 and 16, wherein the electroconductive filler-containing resin is applied to the one side of the one metal sheet excluding the side edge regions, each of which has a distance of at least 10 mm and at most 15 mm from the side edge inwardly in the width direction of the metal sheet, when the resin has a thickness of 30 to 60 µm after the press-bonding.

18. A process according to claim 15 or 16, wherein the electroconductive filler-free resin is applied to the one side of the one metal sheet excluding the side edge regions, each of which has a distance of at least 10 mm and at most 15 mm from the edge inwardly in the width direction of the metal sheet, when the resin has a thickness of 30 to 60 µm after the press-bonding.

19. A process according to claim 11 which comprises providing a film resin between metal sheets and press-bonding the film resin between the metal sheets,
wherein a resin supply passage of resin discharge nozzle is divided into a center region and side edge regions in the width direction of the resin discharge nozzle, an electroconductive filler-containing resin and an electroconductive filler-free resin are selectively supplied to the center region and the side edge regions and discharged from the nozzle, thereby forming a film resin composed of the resins and the film resin is provided between the metal sheets.

20. A process according to claim 19, wherein the film resin discharged from the nozzle, to which the resins are selectively supplied, is cooled and adjusted to a desired film thickness by a cooling roll, wound in a coil form together with a separating paper, thereby making a resin film, and the resin film is supplied to a resin-sandwiched metal laminate production facility and provided between the metal sheets.

21. A process according to claim 19 or 20, wherein the electroconductive filler free resin is supplied to the center region of the resin discharge nozzle and the electroconductive filler-containing resin is supplied to the side edge regions of the resin discharge nozzle.

22. A process according to claim 19 or 20, wherein the electroconductive filler-containing resin is supplied to the center region of the resin discharge nozzle and the electroconductive filler-free resin is discharged to the side edge regions of the resin discharge nozzle.

23. A process according to any one of claims 19 to 21, wherein the resin film is provided between the metal sheets in such a manner that the electroconductive filler-containing resin is provided in side edge regions, each of which has a distance 20 to 300 mm from the side edge inwardly in the width direction of the metal sheets and which are formed between the metal sheets, and the electroconductive filler-free resin is provided in the center region, which is the remaining part in the width direction of the metal sheets and which is formed between the metal sheets.

24. A process according to any one of claims 19 to 23, wherein the electroconductive filler-containing resin is provided between the metal sheets in such a manner of excluding side edge regions, each of which has a distance of at least 10 mm and at most 15 mm from the side edge inwardly in the width direction of the metal sheets, when the resin film has a thickness of 30 to 60 µm after the press-bonding.

25. A process according to claim 19 or 23, wherein the electroconductive filler-free resin is provided between the metal sheets in such a manner of excluding side edge regions each of which has a distance of at least 10 mm and at most 15 mm from the side edge inwardly in the width direction of the metal sheets, when the resin film has a thickness of 30 to 60 µm after the press-bonding.

26. A process according to any one of claims 12 to 25, wherein at least one of the one and another metal sheets has a convex-curved shape towards the side edge in the width direction at least at one side edge in the width direction.

27. A process according to any one of claims 12 to 26, wherein after the resin or the resin film is provided between the metal sheets, the metal sheets are pressed in the full width in the width direction of the metal sheets by pressing rolls, thereby press-bonding the resin between the metal sheets, and then the side edge parts in the width direction of the metal sheets are pressed by rolls, thereby press-bonding the resin.

28. A process according to any one of claims 12 to 27, wherein a surface of the resin or the film resin which has been provided on one side of one metal sheet is provided on a surface of the resin or the film resin which has been provided on one side of another metal sheet and the film resins are press-bonded between the metal sheets.

29. A process according to claim 11 which further comprises the steps of: applying a resin to one side of one metal sheet, placing another metal sheet on the surface of the applied resin and press-bonding the resin between the metal sheets or the steps of: providing a film resin between the metal sheets and press-bonding the film resin between the metal sheets, the resin is provided in a center region in such a manner of excluding side edge regions, each of which is formed in the width direction of the metal sheets and between the metal sheets, and the resin is press-bonded between the metal sheets.

30. A process according to claim 29, wherein the resin is provided in the center region in such a manner of excluding the side edge regions, each of which has a distance of at least 10 mm and at most 15 mm from the side edge inwardly in the width direction of the metal sheets, when the resin has a thickness of 30 to 60 µm after the press-bonding.

31. A process according to claim 11 which further comprises the steps of: applying a resin to one side of one metal sheet, placing another metal sheet on the surface of the applied resin and press-bonding the resin between the metal sheets or the steps of: providing a film resin between the metal sheets and press-bonding the resin between the metal sheets, where each of the metal sheets has a convex-curved shape towards the side edges at both side edges in the width direction of the metal sheet, and the resin is provided between the metal sheets and press-bonded between the metal sheets.

32. A process according to claim 31, wherein one of the metal sheets has a convex-curved shape toward side edges at both side edges in the width direction of the metal sheet and the another metal sheet has a straight shape at both side edges in the width direction of the metal sheet.

33. A process according to claim 11 which further comprises providing a resin between metal sheets, pressing the metal sheets in the full width in the width direction of the metal sheets by pressing rolls, thereby press-bonding the resin between the metal sheets, and then pressing both side edge parts in the width direction of the metal sheets by rolls, thereby press-bonding the resin.

34. A process according to claim 11 which further comprises providing a resin between metal sheets, pressing both side edges in the width direction of the metal sheets by rolls, thereby press-bonding the resin between the metal sheets, and then pressing the metal sheets in the full width in the width direction by pressing rolls, thereby press-bonding the resin between the metal sheets.

35. A process according to any of claims 11 to 34, wherein the metal sheets are steel sheets.

36. A process according to claim 35, wherein the steel sheets are steel bands.

37. An apparatus for producing a resin-sandwiched metal laminate by applying a resin to one side of one metal sheet, placing another metal sheet on the surface of the applied resin and press-bonding the resin between the metal sheets, the apparatus having a resin-applying means which comprises:
resin supply passages formed by dividing a resin supply passage into a center region and side edge regions on a resin table in the width direction of the resin table,
a resin tank for supplying an electroconductive filler-containing resin to one of the resin supply passages through an electroconductive filler-containing resin line,
another resin tank for supplying an electroconductive filler-free resin to the remaining resin supply passage through an electroconductive filler-free resin line,
a resin table for selectively supplying the electroconductive filler-containing resin and the electroconductive filler-free resin to a resin coater roll through a pick-up roll,
a resin coater roll for coating the selectively supplied resins to one side of one metal sheet,
a resin receiver for recovering excess resin supplied to the resin supply passage formed in the center region on the resin table,
resin receivers for recovering excess resin supplied to the resin supply passages formed in side edge regions on the resin table, and
separators for recovering the electroconductive filler-containing resin and the electroconductive resin-free resin supplied in excess to the pickup roll and the coater roll without intermixing of the resins, provided at boundary positions of the resins.

38. An apparatus according to claim 37, wherein the resin supply passages formed in the side edge regions on the resin table have a resin supply outlet to the pickup roll surface.

39. An apparatus according to claim 37 or 38, wherein the resin receivers for recovering the excess resin supplied to the resin supply passage formed in the side edge regions on the resin table are troughs and the separators are partition plates provided at the upper parts on both sides of the troughs.

40. An apparatus according to any of claims 37 to 39, wherein resin return lines for returning the excess resin from the resin receivers to the respective resin tanks are further provided.

41. An apparatus according to any of claims 37 to 40, wherein the metal sheets are steel sheets.

42. An apparatus according to claim 41, wherein the steel sheets are steel bands.

## Patentansprüche

1. Harz-Laminat, das eine zwischen zwei Metallblechen oder -bändern angeordnete Harzschicht (2, 2a) aufweist, wobei die Harzschicht (2, 2a) an zu schweißenden Teilen des Laminats elektrisch leitend ist und einen Füllstoff enthält und an den anderen Teilen zwischen den Blechen oder Bändern füllstofffrei ist.

2. Harz-Laminat nach Anspruch 1, das ein Paar vorder- und rückseitige Metallbleche und eine Harzschicht aufweist und zwischen den vorder- und rückseitigen Metallblechen elektrischen Strom leiten kann, wobei die Harzschicht aus elektrisch leitenden Füllstoff enthaltenden Harzbereichen an den Seitenkanten der Harzschicht in Breitenrichtung der Metallbleche und aus einem von elektrisch leitendem Füllstoff freien mittleren Harzbereich besteht, der zwischen den elektrisch leitenden Füllstoff enthaltenden Harzbereichen an den Seitenkanten vorgesehen ist.

3. Harz-Laminat nach Anspruch 2, wobei die elektrisch leitenden Füllstoff enthaltenden Harzbereiche mindestens ein Metallpulver, das unter Nickelpulver, Eisenpulver, Pulver aus rostfreiem Stahl und Aluminiumpulver ausgewählt ist, als elektrisch leitenden Füllstoff enthalten.

4. Harz-Laminat nach Anspruch 2 oder 3, wobei die an den Seitenkanten vorgesehenen, elektrisch leitenden Füllstoff enthaltenden Harzbereiche in einem Abstand von jeweils 20 mm bis 300 mm von den Seitenkanten in Breitenrichtung der Metallbleche in Breitenrichtung nach innen angeordnet sind.

5. Harz-Laminat nach einem der Ansprüche 2 bis 4, wobei mindestens eine der Seitenkanten in Breitenrichtung mindestens eines von einem Paar vorder- und rückseitiger Metallbleche eine zur Seitenkante in Breitenrichtung hin konvex gekrümmte Form aufweist.

6. Harz-Laminat nach einem der Ansprüche 2 bis 5, wobei die vorder- und rückseitigen Bleche Stahlbleche sind.

7. Harz-Laminat nach Anspruch 6, wobei die Stahlbleche Stahlbänder sind.

8. Harz-Laminat nach einem der Ansprüche 2 bis 7, wobei mindestens ein Abschnitt des von elektrisch leitendem Füllstoff freien mittleren Harzbereichs der Harzschicht in Breitenrichtung der Metallbleche aus dem elektrisch leitenden Füllstoff enthaltenden Harz statt aus dem von elektrisch leitendem Füllstoff freien Harz besteht.

9. Harz-Laminat nach Anspruch 8, wobei die Breite des einen Abschnitts, der aus dem elektrisch leitenden Füllstoff enthaltenden Harz besteht, 20 mm bis 600 mm in Breitenrichtung der Metallbleche beträgt.

10. Harz-Laminat nach Anspruch 1, wobei die Harzschicht aus einem von elektrisch leitendem Füllstoff freien Harzbereich an den Seitenkanten der Harzschicht in Breitenrichtung der Metallbleche und einem elektrisch leitenden Füllstoff enthaltenden mittleren Harzbereich zwischen den von elektrisch leitendem Füllstoff freien Harzbereichen an den Seitenkanten besteht.

11. Verfahren zur Herstellung eines Harz-Laminats, das eine zwischen zwei Metallblechen oder -bändern angeordnete Harzschicht aufweist, mit den Schritten: Bereitstellen eines elektrisch leitenden Füllstoff enthaltenden Harzes zwischen den Blechen oder Bändern an zu schweißenden Teilen des Laminats und Bereitstellen eines von elektrisch leitendem Füllstoff freien Harzes an den anderen Teilen.

12. Verfahren nach Anspruch 11, welches das Aufbringen eines Harzes auf eine Seite eines Metallblechs, das Bereitstellen eines weiteren Metallblechs an der Oberfläche des aufgebrachten Harzes und das Preßverbinden des Harzes zwischen den Metallblechen aufweist,
wobei ein Harzzuführungskanal auf einem Harztisch in einen mittleren Bereich und Seitenkantenbereiche in Breitenrichtung des Harztisches unterteilt ist und ein elektrisch leitenden Füllstoff enthaltendes Harz sowie ein von elektrisch leitendem Füllstoff freies Harz selektiv dem mittleren Bereich und den Seitenkantenbereichen zugeführt und dann auf eine Seite eines Metallblechs aufgebracht werden.

13. Verfahren nach Anspruch 12, wobei das elektrisch leitenden Füllstoff enthaltende Harz und das von elektrisch leitendem Füllstoff freie Harz, die dem mittleren Bereich und den Seitenkantenbereichen auf dem Harztisch zugeführt werden, durch eine Zwischenwalze und eine Auftragswalze vom Harztisch auf eine Seite eines Metallblechs aufgebracht werden.

14. Verfahren nach Anspruch 12 oder 13, wobei das von elektrisch leitendem Füllstoff freie Harz dem mittleren Bereich auf dem Harztisch zugeführt wird und das elektrisch leitenden Füllstoff enthaltende Harz den Seitenkantenbereichen auf dem Harztisch zugeführt wird.

15. Verfahren nach Anspruch 12 oder 13, wobei das elektrisch leitenden Füllstoff enthaltende Harz dem mittleren Bereich auf dem Harztisch zugeführt wird und das von elektrisch leitendem Füllstoff freie Harz den Seitenkantenbereichen auf dem Harztisch zugeführt wird.

16. Verfahren nach einem der Ansprüche 12 bis 14, wobei das elektrisch leitenden Füllstoff enthaltende Harz auf Seitenkantenbereiche auf der einen Seite des einen Metallblechs aufgebracht wird, die jeweils einen Abstand von 20 bis 300 mm von der Seitenkante in Breitenrichtung des Metallblechs nach innen aufweisen, und wobei das von elektrisch leitendem Füllstoff freie Harz auf den übrigen Teil auf der einen Seite des Metallblechs aufgebracht wird.

17. Verfahren nach einem der Ansprüche 12 bis 14 und 16, wobei das elektrisch leitenden Füllstoff enthaltende Harz auf die eine Seite des einen Metallblechs mit Ausnahme der Seitenkantenbereiche aufgebracht wird, die jeweils einen Abstand von mindestens 10 mm und höchstens 15 mm von der Seitenkante in Breitenrichtung des Metallblechs nach innen aufweisen, wenn das Harz nach dem Preßverbinden eine Dicke von 30 bis 60 µm hat.

18. Verfahren nach Anspruch 15 oder 16, wobei das von elektrisch leitendem Füllstoff freie Harz auf die eine Seite des einen Metallblechs mit Ausnahme der Seitenkantenbereiche aufgebracht wird, die jeweils einen Abstand von mindestens 10 mm und höchstens 15 mm von der Kante in Breitenrichtung des Metallblechs nach innen aufweisen, wenn das Harz nach dem Preßverbinden eine Dicke von 30 bis 60 µm hat.

19. Verfahren nach Anspruch 11, welches das Einbringen eines Schichtharzes zwischen Metallblechen und das Preßverbinden des Schichtharzes zwischen den Metallblechen aufweist,
wobei ein Harzzuführungskanal der Harzausbringungsdüse in einen mittleren Bereich und Seitenkantenbereiche in Breitenrichtung der Harzausbringungsdüse unterteilt ist und ein elektrisch leitenden Füllstoff enthaltendes Harz sowie ein von elektrisch leitendem Füllstoff freies Harz selektiv dem mittleren Bereich und den Seitenkantenbereichen zugeführt und aus der Düse ausgebracht werden, wodurch ein aus den Harzen zusammengesetztes Schichtharz gebildet wird und das Schichtharz zwischen den Metallblechen eingebracht wird.

20. Verfahren nach Anspruch 19, wobei das Schichtharz, das aus der Düse ausgebracht wird, der die Harze selektiv zugeführt werden, durch eine Kühlwalze abgekühlt und auf eine gewünschte Schichtdicke eingestellt und zusammen mit einem Trennpapier in Rollenform aufgewickelt wird, wodurch eine Harzschicht hergestellt wird, und wobei die Harzschicht einer Harz-Metall-Laminat-Produktionseinrichtung zugeführt und zwischen den Metallblechen eingebracht wird.

21. Verfahren nach Anspruch 19 oder 20, wobei das von elektrisch leitendem Füllstoff freie Harz dem mittleren Bereich der Harzausbringungsdüse zugeführt wird und das elektrisch leitenden Füllstoff enthaltende Harz den Seitenkantenbereichen der Harzausbringungsdüse zugeführt wird.

22. Verfahren nach Anspruch 19 oder 20, wobei das elektrisch leitenden Füllstoff enthaltende Harz dem mittleren Bereich der Harzausbringungsdüse zugeführt wird und das von elektrisch leitendem Füllstoff freie Harz den Seitenkantenbereichen der Harzausbringungsdüse zugeführt wird.

23. Verfahren nach einem der Ansprüche 19 bis 21, wobei die Harzschicht zwischen den Metallblechen so eingebracht wird, daß das elektrisch leitenden Füllstoff enthaltende Harz in den Seitenkantenbereichen eingebracht wird, die jeweils einen Abstand von 20 bis 300 mm von der Seitenkante in Breitenrichtung der Metallbleche nach innen aufweisen und zwischen den Metallblechen ausgebildet sind, und das von elektrisch leitendem Füllstoff freie Harz im mittleren Bereich eingebracht wird, der den übrigen Teil in Breitenrichtung der Metallbleche bildet und zwischen den Metallblechen ausgebildet ist.

24. Verfahren nach einem der Ansprüche 19 bis 23, wobei das elektrisch leitenden Füllstoff enthaltende Harz zwischen den Metallblechen so eingebracht wird, daß Seitenkantenbereiche ausgeschlossen sind, die jeweils einen Abstand von mindestens 10 mm und höchstens 15 mm von der Seitenkante in Breitenrichtung der Metallbleche nach innen aufweisen, wenn die Harzschicht nach dem Preßverbinden eine Dicke von 30 bis 60 µm hat.

25. Verfahren nach Anspruch 19 oder 23, wobei das von elektrisch leitendem Füllstoff freie Harz zwischen den Metallblechen so eingebracht wird, daß Seitenkantenbereiche ausgeschlossen sind, die jeweils einen Abstand von mindestens 10 mm und höchstens 15 mm von der Seitenkante in Breitenrichtung der Metallbleche nach innen aufweisen, wenn die Harzschicht nach dem Preßverbinden eine Dicke von 30 bis 60 µm hat.

26. Verfahren nach einem der Ansprüche 12 bis 25, wobei mindestens eines von dem einen und einem anderen Metallblech an mindestens einer Seitenkante in Breitenrichtung eine zur Seitenkante in Breitenrichtung hin konvex gekrümmte Form aufweist.

27. Verfahren nach einem der Ansprüche 12 bis 26, wobei nach dem Einbringen des Harzes oder der Harzschicht zwischen den Metallblechen die Metallbleche in Breitenrichtung der Metallbleche auf voller Breite durch Preßwalzen gepreßt werden, wodurch das Harz zwischen den Metallblechen preßverbunden wird, und wobei danach die Seitenkantenteile in Breitenrichtung der Metallbleche durch Walzen gepreßt werden, wodurch das Harz preßverbunden wird.

28. Verfahren nach einem der Ansprüche 12 bis 27, wobei eine Oberfläche des auf eine Seite eines Metallblechs aufgebrachten Harzes oder Schichtharzes auf eine Oberfläche des Harzes oder Schichtharzes aufgelegt wird, das auf eine Seite eines weiteren Metallblechs aufgebracht wurde, und die Schichtharze zwischen den Metallblechen preßverbunden werden.

29. Verfahren nach Anspruch 11, das ferner die folgenden Schritte aufweist: Aufbringen eines Harzes auf eine Seite eines Metallblechs, Auflegen eines weiteren Metallblechs auf die Oberfläche des aufgebrachten Harzes und Preßverbinden des Harzes zwischen den Metallblechen, oder die Schritte: Einbringen eines Schichtharzes zwischen den Metallblechen und Preßverbinden des Schichtharzes zwischen den Metallblechen, wobei das Harz in einem mittleren Bereich so eingebracht wird, daß Seitenkantenbereiche ausgeschlossen sind, die jeweils in Breitenrichtung der Metallbleche und zwischen den Metallblechen ausgebildet sind, und wobei das Harz zwischen den Metallblechen preßverbunden wird.

30. Verfahren nach Anspruch 29, wobei das Harz im mittleren Bereich so eingebracht wird, daß Seitenkantenbereiche ausgeschlossen sind, die jeweils einen Abstand von mindestens 10 mm und höchstens 15 mm von der Seitenkante in Breitenrichtung der Metallbleche nach innen aufweisen, wenn das Harz nach dem Preßverbinden eine Dicke von 30 bis 60 µm hat.

31. Verfahren nach Anspruch 11, das ferner die folgenden Schritte aufweist: Aufbringen eines Harzes auf eine Seite eines Metallblechs, Auflegen eines weiteren Metallblechs auf die Oberfläche des aufgebrachten Harzes und Preßverbinden des Harzes zwischen den Metallblechen, oder die Schritte: Einbringen eines Schichtharzes zwischen den Metallblechen und Preßverbinden des Harzes zwischen den Metallblechen, wobei jedes der Metallbleche an beiden Seitenkanten in Breitenrichtung des Metallblechs eine zu den Seitenkanten hin konvex gekrümmte Form aufweist, und wobei das Harz zwischen den Metallblechen eingebracht und zwischen den Metallblechen preßverbunden wird.

32. Verfahren nach Anspruch 31, wobei eines der Metallbleche an beiden Seitenkanten in Breitenrichtung des Metallblechs eine zu den Seitenkanten hin konvex gekrümmte Form aufweist und das andere Metallblech an beiden Seitenkanten in Breitenrichtung des Metallblechs eine gerade Form aufweist.

33. Verfahren nach Anspruch 11, das ferner das Einbringen eines Harzes zwischen Metallblechen, Pressen der Metallbleche auf voller Breite in Breitenrichtung der Metallbleche durch Preßwalzen, wodurch das Harz zwischen den Metallblechen preßverbunden wird, und anschließendes Pressen beider Seitenkanten in Breitenrichtung der Metallbleche durch Walzen aufweist, wodurch das Harz preßverbunden wird.

34. Verfahren nach Anspruch 11, das ferner das Einbringen eines Harzes zwischen Metallblechen, Pressen beider Seitenkanten in Breitenrichtung der Metallbleche durch Walzen, wodurch das Harz zwischen den Metallblechen preßverbunden wird, und anschließendes Pressen der Metallbleche auf voller Breite in Breitenrichtung durch Preßwalzen aufweist, wodurch das Harz zwischen den Metallblechen preßverbunden wird.

35. Verfahren nach einem der Ansprüche 11 bis 34, wobei die Metallbleche Stahlbleche sind.

36. Verfahren nach Anspruch 35, wobei die Stahlbleche Stahlbänder sind.

37. Vorrichtung zur Herstellung eines Harz-Laminats durch Aufbringen eines Harzes auf eine Seite eines Metallblechs, Auflegen eines weiteren Metallblechs auf die Oberfläche des aufgebrachten Harzes und Preßverbinden des Harzes zwischen den Metallblechen, wobei die Vorrichtung mit einer Harzauftragseinrichtung ausgestattet ist, welche aufweist:
Harzzuführungskanäle, die durch Unterteilen eines Harzzuführungskanals in einen mittleren Bereich und Seitenkantenbereiche auf einem Harztisch in Breitenrichtung des Harztisches ausgebildet werden,
einen Harzbehälter zum Zuführen eines elektrisch leitenden Füllstoff enthaltenden Harzes zu einem der Harzzuführungskanäle durch eine Leitung für elektrisch leitenden Füllstoff enthaltendes Harz,
einen weiteren Harzbehälter zum Zuführen eines von elektrisch leitendem Füllstoff freien Harzes zu dem verbleibenden Harzzuführungskanal durch eine Leitung für von elektrisch leitendem Füllstoff freies Harz,
einen Harztisch zum selektiven Zuführen des elektrisch leitenden Füllstoff enthaltenden Harzes und des von elektrisch leitendem Füllstoff freien Harzes durch eine Aufnahmewalze zu einer Auftragswalze,
eine Harzauftragswalze zum Auftragen der selektiv zugeführten Harze auf eine Seite eines Metallblechs,
einen Harzauffangbehälter zur Rückgewinnung von überschüssigem Harz, das dem im mittleren Bereich auf dem Harztisch ausgebildeten Harzzuführungskanal zugeführt wurde,
Harzauffangbehälter zur Rückgewinnung von überschüssigem Harz, das den in Seitenkantenbereichen auf dem Harztisch ausgebildeten Harzzuführungskanälen zugeführt wurde, und
in Grenzpositionen der Harze angebrachte Separatoren, um das elektrisch leitenden Füllstoff enthaltende Harz und das von elektrisch leitendem Füllstoff freie Harz, die der Aufnahmewalze und der Auftragswalze im Überschuß zugeführt wurden, ohne Durchmischung der Harze zurückzugewinnen.

38. Vorrichtung nach Anspruch 37, wobei die in den Seitenkantenbereichen auf dem Harztisch ausgebildeten Harzzuführungskanäle einen Harzzuführungsauslaß zur Oberfläche der Aufnahmewalze aufweisen.

39. Vorrichtung nach Anspruch 37 oder 38, wobei die Harzauffangbehälter zur Rückgewinnung des überschüssigen Harzes, das dem in den Seitenkantenbereichen auf dem Harztisch ausgebildeten Harzzuführungskanal zugeführt wurde, Tröge sind, und wobei die Separatoren Trennplatten sind, die an den oberen Teilen auf beiden Seiten der Tröge angebracht sind.

40. Vorrichtung nach einem der Ansprüche 37 bis 39, wobei ferner Harzrückleitungen zur Rückführung des überschüssigen Harzes von den Harzauffangbehältern zu den entsprechenden Harzbehältern vorgesehen sind.

41. Vorrichtung nach einem der Ansprüche 37 bis 40, wobei die Metallbleche Stahlbleche sind.

42. Vorrichtung nach Anspruch 41, wobei die Stahlbleche Stahlbänder sind.

## Revendications

1. Stratifié de sandwich résine, comprenant une couche de résine (2, 2a) disposée entre deux feuilles ou bandes métalliques,
dans lequel
la couche de résine (2, 2a) est électroconductrice et contient une matière de remplissage à l'endroit des parties du stratifié qui doivent être soudées, et ne contient pas de matière de remplissage à l'endroit des autres parties entre les feuilles ou bandes métalliques.

2. Stratifié de sandwich résine selon la revendication 1,
comprenant
une paire de feuilles métalliques face et dos ainsi qu'une couche de résine, en étant capable de laisser passer l'électricité entre la feuille métallique avant et la feuille métallique arrière, la couche de résine étant composée de zones de résine contenant une matière de remplissage électroconductrice à l'endroit des bords latéraux de la couche de résine, dans le sens de la largeur des feuilles métalliques, et une zone centrale de résine ne contenant pas de matière de remplissage électroconductrice, cette zone centrale étant prévue entre les zones de résine contenant de la matière de remplissage électroconductrice à l'endroit des bords latéraux.

3. Stratifié de sandwich résine selon la revendication 2,
dans lequel
les zones de résine contenant de la matière de remplissage électroconductrice contiennent au moins une poudre métallique choisie parmi la poudre de nickel, la poudre de fer, la poudre d'acier inoxydable et la poudre d'aluminium, comme matière de remplissage électroconductrice.

4. Stratifié de sandwich résine selon la revendication 2 ou 3,
dans lequel
les zones de résine contenant de la matière de remplissage électroconductrice, prévues à l'endroit des bords latéraux, sont situées chacune à une distance de 20 mm à 300 mm des bords latéraux, dans le sens de la largeur des feuilles métalliques, vers l'intérieur dans ce sens de la largeur.

5. Stratifié de sandwich résine selon l'une quelconque des revendications 2 à 4,
dans lequel
l'un au moins des bords latéraux, dans le sens de la largeur de l'une au moins d'une paire de feuilles métalliques avant et arrière, présente une forme à courbure convexe vers la zone de bord, dans le sens de la largeur.

6. Stratifié de sandwich résine selon l'une quelconque des revendications 2 à 5,
dans lequel
les feuilles avant et arrière sont des feuilles d'acier.

7. Stratifie de sandwich résine selon la revendication 6,
dans lequel
les feuilles d'acier sont des bandes d'acier.

8. Stratifié de sandwich résine selon l'une quelconque des revendications 2 à 7,
dans lequel
au moins une partie de la zone centrale de résine ne contenant pas de matière de remplissage électroconductrice, de la couche de résine, dans le sens de la largeur des feuilles métalliques, est composée de la résine contenant de la matière de remplissage électroconductrice au lieu de la résine ne contenant pas de matière de remplissage électroconductrice.

9. Stratifié de sandwich résine selon la revendication 8,
dans lequel
la largeur de la partie composée de la résine contenant de la matière de remplissage électroconductrice, est de 20 mm à 600 mm dans le sens de la largeur des feuilles métalliques.

10. Stratifié de sandwich résine selon la revendication 1,
dans lequel
la couche de résine est composée d'une zone de résine ne contenant pas de matière de remplissage électroconductrice à l'endroit des bords latéraux de la couche de résine, dans le sens de la largeur des feuilles métalliques, et d'une zone centrale de résine contenant de la matière de remplissage électroconductrice, entre les zones de résine ne contenant pas de matière de remplissage électroconductrice à l'endroit des bords latéraux.

11. Procédé de fabrication d'un stratifié de sandwich
résine comprenant une couche de résine disposée entre deux feuilles ou bandes métalliques,
ce procédé comprenant les étapes consistant à utiliser, entre les feuilles ou bandes métalliques, une résine contenant de la matière de remplissage électroconductrice pour former des parties du stratifié devant être soudées, et à utiliser une résine ne contenant pas de matière de remplissage électroconductrice à l'endroit des autres parties.

12. Procédé selon la revendication 11, consistant à appliquer une résine sur un côté d'une feuille métallique, à placer une autre feuille métallique sur la surface recouverte de résine, et à coller à la presse la résine entre les feuilles métalliques,
dans lequel
un passage d'alimentation de résine sur une table à résine est divisé en une zone centrale et des zones de bords latéraux, dans le sens de la largeur de la table à résine, tandis qu'une résine contenant une matière de remplissage électroconductrice et une résine ne contenant pas de matière de remplissage électroconductrice sont fournies sélectivement à la zone centrale et aux zones de bords latéraux, puis sont appliquées sur un côté d'une feuille métallique.

13. Procédé selon la revendication 12,
dans lequel
la résine contenant de la matière de remplissage électroconductrice et la résine ne contenant pas de matière de remplissage électroconductrice, appliquées à la zone centrale et aux zones de bords latéraux sur la table à résine, sont appliquées sur un côté d'une feuille métallique par un rouleau intermédiaire et un rouleau de revêtement, à partir de la table à résine.

14. Procédé selon la revendication 12 ou 13,
dans lequel
la résine ne contenant pas de matière de remplissage électroconductrice est fournie à la zone centrale sur la table à résine, tandis que la résine contenant de la matière de remplissage électroconductrice est fournie aux zones de bords latéraux sur la table à résine.

15. Procédé selon la revendication 12 ou 13,
dans lequel
la résine contenant de la matière de remplissage électroconductrice est fournie à la zone centrale sur la table à résine, tandis que la résine ne contenant pas de matière de remplissage électroconductrice est fournie aux zones de bords latéraux sur la table à résine.

16. Procédé selon l'une quelconque des revendications 12 à 14,
dans lequel
la résine contenant de la matière de remplissage électroconductrice est appliquée aux zones de bords latéraux sur le premier côté d'une feuille métallique, chacune de ces zones s'étendant sur une distance de 20 à 300 mm vers l'intérieur à partir du bord latéral, dans le sens de la largeur de la feuille métallique, tandis que la résine ne contenant pas de matière de remplissage électroconductrice est appliquée à la partie restante sur ce premier côté de la feuille métallique.

17. Procédé selon l'une quelconque des revendications 12 à 14 et 16,
dans lequel
la résine contenant de la matière de remplissage électroconductrice est appliquée sur le premier côté de la feuille métallique en excluant les zones de bords latéraux, chacune de ces zones s'étendant vers l'intérieur sur une distance d'au moins 10 mm et d'au plus 15 mm à partir du bord latéral, dans le sens de la largeur de la feuille métallique, lorsque la résine a une épaisseur de 30 à 60 µm après le collage à la presse.

18. Procédé selon la revendication 15 ou 16,
dans lequel
la résine ne contenant pas de matière de remplissage électroconductrice est appliquée au premier côté de la feuille métallique en excluant les zones de bords latéraux, chacune de ces zones s'étendant vers l'intérieur sur une distance d'au moins 10 mm et d'au plus 15 mm à partir du bord, dans le sens de la largeur de la feuille métallique, lorsque la résine présente une épaisseur de 30 à 60 µm après le collage à la presse.

19. Procédé selon la revendication 11, comprenant l'utilisation d'un film de résine entre des feuilles métalliques, et le collage à la presse du film de résine entre les feuilles métalliques,
dans lequel
un passage d'alimentation en résine d'une buse de décharge de résine est divisé en une zone centrale et des zones de bords latéraux, dans le sens de la largeur de la buse de décharge de résine, une résine contenant de la matière de remplissage électroconductrice et une résine ne contenant pas de matière de remplissage électroconductrice étant fournies sélectivement à la zone centrale et aux zones de bords latéraux, pour être déchargées par la buse, ce qui permet ainsi de former un film de résine composé des résines ci-dessus, et de fournir le film de résine entre les feuilles métalliques.

20. Procédé selon la revendication 19,
dans lequel
le film de résine déchargé par la buse à laquelle les résines sont fournies sélectivement, est refroidi et réglé à une épaisseur de film voulue par un rouleau de refroidissement, puis enroulé sous la forme d'une bobine en même temps qu'un papier de séparation, pour former ainsi un film de résine, ce film de résine étant fourni à une installation de fabrication de stratifié de sandwich métal-résine, et placé entre les feuilles métalliques.

21. Procédé selon la revendication 19 ou 20,
dans lequel
la résine ne contenant pas de matière de remplissage électroconductrice est fournie à la zone centrale de la buse de décharge de résine, et la résine contenant de la matière de remplissage électroconductrice est fournie aux zones de bords latéraux de la buse de décharge de résine.

22. Procédé selon la revendication 19 ou 20,
dans lequel
la résine contenant de la matière de remplissage électroconductrice est fournie à la zone centrale de la buse de décharge de résine, et la résine ne contenant pas de matière de remplissage électroconductrice est fournie aux zones de bords latéraux de la buse de décharge de résine.

23. Procédé selon l'une quelconque des revendications 19 à 21,
dans lequel
le film de résine est fourni entre les feuilles métalliques de façon que la résine contenant de la matière de remplissage électroconductrice soit fournie dans les zones de bords latéraux s'étendant chacune vers l'intérieur sur une distance de 20 à 300 mm à partir du bord latéral, dans le sens de la largeur des feuilles métalliques, ces zones étant formées entre les feuilles métalliques, et de façon que la résine ne contenant pas de matière de remplissage électroconductrice soit fournie dans la zone centrale qui constitue la partie restante, dans le sens de la largeur, des feuilles métalliques, et qui est formée entre les feuilles métalliques.

24. Procédé selon l'une quelconque des revendications 19 à 23,
dans lequel
la résine contenant de la matière de remplissage électroconductrice est fournie entre les feuilles métalliques de manière à exclure les zones de bords latéraux s'étendant chacune, vers l'intérieur, sur une distance d'au moins 10 mm et d'au plus 15 mm à partir du bord latéral, dans le sens de la largeur des feuilles métalliques, lorsque le film de résine a une épaisseur de 30 à 60 µm après le collage à la presse.

25. Procédé selon la revendication 19 ou 23,
dans lequel
la résine ne contenant pas de matière de remplissage électroconductrice est fournie entre les feuilles métalliques de manière à exclure les zones de bords latéraux s'étendant chacune, vers l'intérieur, sur une distance d'au moins 10 mm et d'au plus 15 mm à partir du bord latéral, dans le sens de la largeur des feuilles métalliques, lorsque le film de résine a une épaisseur de 30 à 60 µm après le collage à la presse.

26. Procédé selon l'une quelconque des revendications 12 à 25,
dans lequel
l'une au moins des deux feuilles métalliques présente une forme à courbure convexe vers le bord latéral dans le sens de la largeur, sur au moins un bord latéral dans ce sens de la largeur.

27. Procédé selon l'une quelconque des revendications 12 à 26,
dans lequel
après fourniture de la résine ou du film de résine entre les feuilles métalliques, ces feuilles métalliques sont pressées sur toute la largeur, dans le sens de la largeur des feuilles métalliques, par des rouleaux de pressage, pour coller ainsi la résine à la presse entre les feuilles métalliques, puis les parties de bords latéraux, dans le sens de la largeur des feuilles métalliques, sont pressées par des rouleaux, pour coller ainsi la résine à la presse.

28. Procédé selon l'une quelconque des revendications 12 à 27,
dans lequel
une surface de la résine ou du film de résine ayant été fourni sur un côté d'une feuille métallique, est placée sur une surface de la résine ou du film de résine ayant été placé sur un côté d'une autre feuille métallique, puis les films de résine sont collés à la presse entre les feuilles métalliques.

29. Procédé selon la revendication 11,
comprenant en outre
les étapes consistant à :
appliquer une résine sur un côté d'une feuille métallique,
placer une autre feuille métallique sur la surface de la résine appliquée, et
lier à la presse la résine entre les feuilles métalliques,
ou les étapes consistant à :
fournir un film de résine entre les feuilles métalliques et coller le film de résine à la presse entre les feuilles métalliques, la résine étant fournie dans une zone centrale de manière à exclure les zones de bords latéraux formées chacune dans le sens de la largeur des feuilles métalliques, et entre les feuilles métalliques, et la résine étant liée à la presse entre les feuilles métalliques.

30. Procédé selon la revendication 29,
dans lequel
la résine est fournie dans la zone centrale de manière à exclure les zones de bords latéraux s'étendant chacune, vers l'intérieur, sur une distance d'au mois 10 mm et d'au plus 15 mm à partir du bord latéral, dans le sens de la largeur des feuilles métalliques, lorsque la résine a une épaisseur de 30 à 60 µm après le collage à la presse.

31. Procédé selon la revendication 11,
comprenant en outre
les étapes consistant à :
appliquer une résine sur un côté d'une feuille métallique,
placer une autre feuille métallique sur la surface de la résine appliquée, et
coller à la presse la résine entre les feuilles métalliques,
ou les étapes consistant à :
fournir un film de résine entre les feuilles métalliques et lier la résine à la presse entre les feuilles métalliques,
chacune de ces feuilles métalliques ayant une forme à courbure convexe vers les bords latéraux, à l'endroit des deux bords latéraux dans le sens de la largeur de la feuille métallique, puis la résine étant fournie entre les feuilles métalliques et liée à la presse entre ces feuilles métalliques.

32. Procédé selon la revendication 31,
dans lequel
l'une des feuilles métalliques a une forme à courbure convexe vers les bords latéraux à l'endroit des deux bords latéraux, dans le sens de la largeur de la feuille métallique, et l'autre feuille métallique a une forme droite à l'endroit des deux bords latéraux, dans le sens de la largeur de la feuille métallique.

33. Procédé selon la revendication 11,
consistant en outre
à fournir une résine entre des feuilles métalliques, à presser les feuilles métalliques sur toute la largeur, dans le sens de la largeur de ces feuilles métalliques, par des rouleaux de pressage, pour lier ainsi la résine à la presse entre les feuilles métalliques, puis à presser ensuite les deux parties de bords latéraux, dans le sens de la largeur des feuilles métalliques, par des rouleaux, pour lier ainsi la résine à la presse.

34. Procédé selon la revendication 11,
consistant en outre
à fournir une résine entre des feuilles métalliques, à presser les deux bords latéraux dans le sens de la largeur des feuilles métalliques, par des rouleaux, pour coller ainsi à la presse la résine entre les feuilles métalliques, puis à presser les feuilles métalliques sur toute la largeur, dans le sens de la largeur, par des rouleaux de pressage, pour lier ainsi la résine à la presse entre les feuilles métalliques.

35. Procédé selon l'une quelconque des revendications 11 à 34,
dans lequel
les feuilles métalliques sont des feuilles d'acier.

36. Procédé selon la revendication 35,
dans lequel
les feuilles d'acier sont des bandes d'acier.

37. Appareil de fabrication d'un stratifié de sandwich résine, en appliquant une résine sur un côté d'une feuille métallique, en plaçant une autre feuille métallique sur la surface de la résine appliquée, et en collant la résine à la presse entre les feuilles métalliques, l'appareil étant muni de moyens d'application de résine qui comprennent :
- des passages d'alimentation de résine formés en divisant un passage d'alimentation de résine en une zone centrale et des zones de bords latéraux sur une table à résine, dans le sens de la largeur de la table à résine,
- un réservoir de résine pour fournir une résine contenant de la matière de remplissage électroconductrice, à l'un des passages d'alimentation de résine, par un conduit de résine contenant de la matière de remplissage électroconductrice,
- un autre réservoir de résine pour fournir une résine ne contenant pas de matière de remplissage électroconductrice, au passage d'alimentation de résine restant, par une conduite de résine ne contenant pas de matière électroconductrice,
- une table à résine pour fournir sélectivement la résine contenant de la matière de remplissage électroconductrice et la résine ne contenant pas de matière de remplissage électroconductrice, à un rouleau de revêtement de résine, par l'intermédiaire d'un rouleau de prélèvement,
- un rouleau de revêtement de résine pour déposer les résines fournies sélectivement sur un côté d'une feuille métallique,
- un récepteur de résine pour récupérer la résine en excès fournie au passage d'alimentation de résine formé dans la zone centrale sur la table à résine,
- des récepteurs de résine pour récupérer la résine en excès fournie aux passages d'alimentation de résine formés dans les zones de bords latéraux sur la table à résine, et
- des séparateurs pour récupérer la résine contenant de la matière de remplissage électroconductrice et la résine ne contenant pas de matière de remplissage électroconductrice, fournies en excès au rouleau de prélèvement et au rouleau de revêtement, sans mélange entre les résines, ces séparateurs étant placés dans des positions limites des résines.

38. Appareil selon la revendication 37,
dans lequel
les passages d'alimentation, de résine formés dans les zones de bords latéraux sur la table à résine, ont une sortie de fourniture de résine vers la surface du rouleau de prélèvement.

39. Appareil selon la revendication 37 ou 38,
dans lequel
les récepteurs de résine destinés à récupérer la résine en excès fournie au passage d'alimentation de résine formé dans les zones de bords latéraux sur la table à résine, sont des bacs, et les séparateurs sont des plaques de cloisonnement prévues à l'endroit des parties supérieures des deux côtés des bacs.

40. Appareil selon l'une quelconque des revendications 37 à 39,
dans lequel
on prévoit en outre des conduites de retour pour ramener aux réservoirs de résine respectifs, la résine en excès provenant des récepteurs de résine.

41. Appareil selon l'une quelconque des revendications 37 à 40,
dans lequel
les feuilles métalliques sont des feuilles d'acier.

42. Appareil selon la revendications 41,
dans lequel
les feuilles d'acier sont des bandes d'acier.
